# EUROPEAN PATENT SPECIFICATION

(11) **EP 1 247 632 B1**
(45) Date of publication and mention of the grant of the patent: **19.01.2005**
(21) Application number: 01108349.0
(22) Date of filing: 03.04.2001
(51) Int. Cl.: B29C 43/00, B29B 17/00

(54) **Method for producing panels formed from chips of thermoplastic material**
Verfahren zur Herstellung von Platten aus zerkleinerten Kunststoffabfällen
Procédé pour la fabrication de panneaux à partir de copeaux de matière plastique

(43) Date of publication of application: 09.10.2002
(73) Proprietor: Preformati B.M.C. S.R.L., 24040 Filago (IT)
(72) Inventor: Locatelli, Luciano, 24040 Filago (Bergamo) (IT)
(74) Representative: Frignoli, Luigi

(56) References cited:
- EP-A- 0 397 280
- DE-A- 4 004 587
- US-A- 5 411 697

## Description

The invention relates to a method for producing panels formed from chips of thermoplastic material.

When working plastic materials, scrap is always obtained in the form either of small or relatively small chips or of larger chips, which can only rarely be used.

The EP-A-0397280 discloses a method for processing plastic waste into blocks, wherein said waste is introduced into a container where it is first compressed, then heated and thereafter cooled to give blocks which do possess around all a hard outer layer and which can so be easily removed.

Since cooling of the pistons takes place only after the plastic waste has been compressed and heated to a temperature sufficient to soften the plastic waste and melt the blocks at their outer surfaces, the core of the blocks is necessarily very compact and hard and is completely or substantially completely deprived of cavities while the blocks possess all a hard outer layer (the plastic waste specified in the reference consists of foils or sheets of plastics of various nature). The DE-A-4004587 and DE-A-3637905 deal with methods according to which chips or crumbles of foamed polystyrene or like plastic material introduced into a mold are first preheated and then compressed in a press, only thereafter the press and consequently the plastic mass being cooled to give a compact block which can be removed from the mold. The procedures are substantially the same as described in the EP-A-0397280 and also the physical features of the blocks are the same, such blocks being substantially rigid and having substantially the same compactness and density in their interior and on their surface layers.

The main object of the present invention is to provide a method which enables such chips to be used to form essentially flat, liquid- impermeable panels the surfaces of which are substantially free of cavities and have a compactness and density higher than in the panel interior, so that the panel surfaces are resistant to wear and can be easily cleaned and washed, though being soft to the touch.

With this method panels can be easily obtained consisting of a plurality or mass of chips of thermoplastic material, pressed one on the other and thermally bonded together along their contact surfaces.

The chips of thermoplastic material are preferably chemically identical to each other, but can be of different nature: their dimensions are less than 20 cm usually with a diameter or side dimension from about 1 cm to about 5 cm.

The method of the present invention for forming the aforesaid panels is characterised in that a mass of chips of thermoplastic material having a dimension less than 20 cm is first fed into a mould in which these chips are heated to a temperature between the softening point and the melting point of the thermoplastic material used, heating is maintained for a time sufficient to cause softening or fusion of the surface of the chips, after which the mass is compressed in a cold press the plates of which have been previously cooled to a temperature less than the aforesaid softening point, pressure being applied for a time sufficient to stabilize the mass of thermoplastic material.

The plates of the press are cooled preferably to a temperature less than ambient temperature and more preferably to a temperature less than 0°C. The chips also advantageously have a dimension between 0.3 and 5 cm.

For a better understanding of the characteristics of the present invention, one embodiment thereof will now be described by way of non- limiting example with reference to the accompanying drawing, in which:
Figure 1 represents an incoherent mass formed from a plurality of chips of thermoplastic material;. and
Figure 2 is a partly sectional perspective representation of a portion of finished panel, obtained by the method of the invention.

Thermoplastic scrap material, recycled material or unused thermoplastic material residues are crushed to reduce them to chips of dimensions between 0.3 and 20 cm, preferably with a diameter or side from 1 to 5 cm: it should be noted that the crushed material must not be reduced to powder.

The starting material used can be any soft (not rigid) thermoplastic material, such as foamed (moulded or extruded) polyethylene with closed or open cells, rubber or the like.

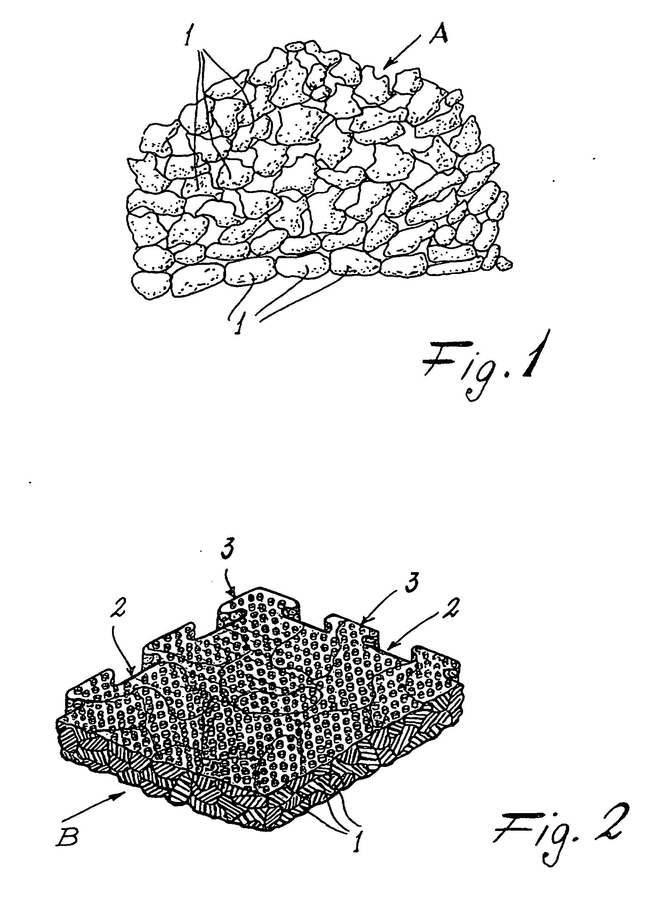

A mass A is prepared by mixing together the aforesaid chips of thermoplastic material, taking note that materials of different type (such as polyethylene and rubber) can also be mixed together, to form an incoherent mass of chips 1, as shown in Figure 1.

This mass A of chips is fed into a mould and is heated to a temperature between the softening point and the melting point of the constituent chips of the material. For example, in the case of foamed polyethylene, the material mass is heated to between 100°C and 150°C, preferably to slightly more than 100°C; if the chips are of rubber, the mass must be heated to a temperature of about 30°C higher than that indicated. Heating is continued for a time depending on the temperature, which must be sufficient to cause surface softening of the chips of heated material.

For example, if the material used is foamed, polyethylene, the chips of which have dimensions of 3-4 cm and these are heated to a temperature of about 150°C, the duration of heating can be from 2 to 4 minutes.

During the heating, fumes develop, which are drawn off and eliminated by water scrubbers. It can be seen that during the heating the material chips contract and the mass formed by them decreases in volume and tends to compact.

The mass A of chips heated in this manner is then compressed at a pressure sufficient to eliminate most of the voids between one chip and the next.

The pressure can be 20 tonnes per square centimetre (but can also be much higher) and remains applied to the mass for a time of about 4-5 minutes, depending on the thickness of the panels to be obtained.

The plates of the press (for example hydraulic) must be energetically cooled (for example to between 5°C and -3°C) to prevent the chips of softened material adhering to the plates of the press and especially to cause energetic and rapid surface cooling of the material chips in contact with the plates, whereas the internal temperature of the panel under formation is still high. In this manner those panel surfaces in contact with the plates become substantially free of cavities (because the still soft internal part of the material chips inside the panel under formation and under pressure rise towards the panel surface to fill any cavities), and present a hardness (although remaining soft), a compactness, a density and a wear resistance which are distinctly higher than encountered within the mass of the panel.

Cooling is then applied to the panels B formed in this manner (Figure 2), the edges of which can be shaped with recesses 2 and with projections complementary to these recesses, such as to enable several panels to be securely and substantially sealedly joined together adjacently; in this manner large surfaces can be obtained, for example for thermal insulation, for covering the floors of gymnasiums or other public or private places, or for forming a soft hygienic cover layer for the floor of stables for fattening or milk cattle, and the like. Panels can also be formed on which small children can lie and play (under absolutely hygienic conditions without danger of hurting themselves), resting panels for domestic animals (in particular dogs), or panels to be used for forming different objects, such as containers and the like.

## Claims

1. A method for producing substantially liquid-impermeable panels formed from chips of thermoplastic material and in which the surface layers of the panel are substantially free of cavities and have a compactness and density higher than in the panel interior between said surface layers, wherein a mass of chips of thermoplastic material having a dimension less than 20 cm is first fed into a mould in which these chips are heated to a temperature between the softening point and the melting point of the thermoplastic material used, heating is maintained for a time sufficient to cause softening or fusion of the surface of the chips, after which the mass is compressed in a cold press the plates of which have been previously cooled to a temperature less than the aforesaid softening point, pressure being applied for a time sufficient to stabilize the mass of thermoplastic material.

2. A method as claimed in claim 1, **characterised in that** the plates of the press are cooled to a temperature less than ambient temperature.

3. A method as claimed in claim 2, **characterised in that** the plates of the press are cooled to a temperature less than 0°C.

4. A method as claimed in claims from 1 to 3, **characterised in that** said chips have dimensions between 0.3 and 5 cm.

5. A method as claimed in claims from 1 to 4, **characterised in that** said chips are foamed polyethylene chips, the mass formed by them is heated to a temperature between 100°C and 160°C for a time between 2 and 6 minutes, the plates of the press are cooled to a temperature between -5°C and -3°C, the pressure exerted by the press plates being about 20 tonnes per cm² and this pressure remaining applied for a time of at least 3 minutes.

## Patentansprüche

1. Verfahren zur Herstellung von im Wesentlichen keine Flüssigkeit durchlassenden Platten, welche aus Stückchen
eines thermoplastischen Materials ausgebildet sind, und wobei die Oberflächenschichten der Platte im Wesentlichen keine Aushöhlungen und eine Kompaktheit und Dichte aufweisen, welche höher als in dem Platteninneren zwischen den Oberflächenschichten ist, wobei eine Masse von Stückchen des thermoplastischen Materials, welche eine Abmessung kleiner 20cm aufweisen, als erstes in eine Form eingeführt wird, in welcher diese Stückchen auf eine Temperatur zwischen dem Erweichungspunkt und dem Schmelzpunkt des verwendeten thermoplastischen Materials aufgeheizt wird, wobei das Aufheizen für eine Zeitspanne beibehalten wird, welche ausreicht, um ein Erweichen oder Schmelzen der Oberfläche der Stückchen zu bewirken, wobei danach die Masse in einer Kaltpresse komprimiert wird, wobei deren Platten davor auf eine Temperatur, welche geringer als der Erweichungspunkt ist, abgekühlt worden sind, wobei ein Druck für eine Zeitspanne aufgebracht wird, welche ausreichend ist, um die Masse des thermoplastischen Materials zu stabilisieren.

2. Verfahren nach Anspruch 1, **dadurch gekennzeichnet, dass** die Platten der Presse auf eine Temperatur abgekühlt werden, welche geringer als die Umgebungstemperatur ist.

3. Verfahren nach Anspruch 2, **dadurch gekennzeichnet, dass** die Platten der Presse auf eine Temperatur abgekühlt werden, welche geringer als 0°C ist.

4. Verfahren nach einem der Ansprüche 1 bis 3, **dadurch gekennzeichnet, dass** die Stückchen Abmessungen zwischen 0,3 und 5cm aufweisen.

5. Verfahren nach einem der Ansprüche 1 bis 4, **dadurch gekennzeichnet, dass** die Stückchen geschäumte Polyethylen-Stückchen sind, wobei die von ihnen ausgebildete Masse auf eine Temperatur zwischen 100°C und 160°C für eine Zeitspanne zwischen 2 und 6 Minuten aufgeheizt wird, wobei die Platten der Presse auf eine Temperatur zwischen -5°C und -3°C abgekühlt werden, wobei der durch die Pressplatten ausgeübte Druck ungefähr 20 Tonnen pro cm² beträgt und dieser Druck für eine Zeitspanne von mindestens 3 Minuten aufgebracht wird.

## Revendications

1. Procédé pour fabriquer des panneaux sensiblement imperméables aux liquides, constitués de copeaux de matière thermoplastique, et dans lesquels les couches de surfaces du panneau sont sensiblement exemptes de cavités et ont une compacité et une densité supérieures à celles existant dans l'intérieur du panneau entre lesdites couches de surfaces, dans lequel une masse de copeaux de matière thermoplastique mesurant moins de vingt centimètres est tout d'abord introduite dans un moule dans lequel ces copeaux sont chauffés à une température comprise entre le point de ramollissement et le point de fusion de la matière thermoplastique utilisée, le chauffage étant maintenu pendant un laps de temps suffisant pour provoquer un ramollissement ou une fusion de la surface des copeaux, après quoi la masse est comprimée dans une presse à froid dont les plaques ont été préalablement refroidies à une température inférieure à ladite température inférieure audit point de ramollissement, une pression étant appliquée pendant un temps suffisant pour stabiliser la masse de matière thermoplastique.

2. Procédé selon la revendication 1, **caractérisé en ce que** les plaques de la presse sont refroidies à une température inférieure à la température ambiante.

3. Procédé selon la revendication 2, **caractérisé en ce que** les plaques de la presse sont refroidies à une température inférieure à 0°C.

4. Procédé selon les revendications 1 à 3, **caractérisé en ce que** lesdits copeaux ont des dimensions comprises entre 0,3 et 5 cm.

5. Procédé selon les revendications 1 à 4, **caractérisé en ce que** lesdits copeaux sont des copeaux de mousse de polyéthylène, la masse formée par ceux-ci est chauffée à une température de 100°C à 160°C pendant un laps de temps de 2 à 6 minutes, les plaques de la presse sont refroidies à une température de - 5°C à - 3°C, la pression exercée par les plaques de la presse étant d'environ 20 tonnes par cm² et cette pression restant appliquée pendant une durée d'au moins 3 minutes.
